# FASCICULE DE BREVET EUROPEEN

(11) **EP 3 263 334 B1**
(45) Date de publication et mention de la délivrance du brevet: **20.02.2019**
(21) Numéro de dépôt: 17182272.9
(22) Date de dépôt: 29.08.2014
(51) Int. Cl.: B32B 27/30, B41M 5/00, B41M 7/00, E04F 15/16, B32B 27/32, B32B 27/40, B32B 27/08

(54) **REVÊTEMENT DE SOL COMPRENANT UN DÉCOR IMPRIMÉ PAR JET D'ENCRE ET PROCÉDÉ DE RÉALISATION D'UN TEL REVÊTEMENT**
BODENBELAG, DER EIN MIT TINTENSTRAHLVERFAHREN AUFGEDRUCKTES DEKOR UMFASST, UND HERSTELLUNGSVERFAHREN EINES SOLCHEN BELAGS
FLOOR COVERING COMPRISING AN INK-JET PRINTED FINISH AND METHOD FOR PRODUCING SUCH A COVERING

(30) Priorité: 10.09.2013 FR 1358671
(43) Date de publication de la demande: 03.01.2018
(62) Demande divisionnaire de: 14182747.7
(73) Titulaire: GERFLOR, 69100 Villeurbanne (FR)
(72) Inventeur: CEYSSON, Olivier, 84500 BOLLENE (FR)
(74) Mandataire: Cabinet Laurent & Charras

(56) Documents cités:
- WO-A1-2007/114715
- CN-A- 102 677 867
- GB-A- 2 424 618
- NL-C1- 1 029 194
- US-A1- 2004 086 678
- US-A1- 2011 268 933

## Description

### DOMAINE TECHNIQUE

La présente invention concerne le secteur technique des revêtements de sols et murs à l'aide de matériaux en polychlorure de vinyle ou similaires et, plus particulièrement, à un revêtement de sol comprenant un décor imprimé par jet d'encre et son procédé de fabrication.

### ART ANTERIEUR

Dans le domaine des revêtements de sol, il est bien connu des dalles ou lames composites à base d'au moins une couche de matière plastique, par exemple du polychlorure de vinyle (PVC). De tels revêtements de sol comprennent habituellement en surface au moins une couche d'usure transparente en matière plastique, essentiellement à base de PVC, sous laquelle ou lesquelles est disposée au moins une couche dite de décor en matière plastique, éventuellement moussée, sur laquelle est imprimé un motif ou un décor par héliogravure, avec une couche dite de support consistant généralement dans une nappe non tissée, de fibres de verre par exemple, noyée dans une matière plastique telle que du PVC. Accessoirement, le revêtement de sol peut comporter sous la couche de support une sous-couche résiliente constituée, par exemple, de mousse.

Les motifs ou décors sont ainsi imprimés par un procédé d'héliogravure sur une couche de décor. L'héliogravure est un procédé d'impression en creux par lequel l'encre est transférée directement depuis le cylindre métallique gravé vers la couche de décor, particulièrement adapté aux très longs tirages des revêtements de sol. Les encres utilisées dans ce procédé d'héliogravure sont généralement des encres à l'eau, qui présentent l'avantage de ne pas émettre de composés organiques volatiles (COV) toxiques et néfastes pour l'environnement, de ne pas être inflammable et d'être stable.

Toutefois, pour réaliser des motifs et des décors, il est souvent nécessaire d'utiliser plusieurs cylindres métalliques gravés qui, lorsqu'ils ne sont pas utilisés, doivent être stockés, grevant ainsi les coûts de fabrication. Or, ces cylindres métalliques sont particulièrement encombrants. Par ailleurs, il convient de graver de nouveaux cylindres métalliques pour chaque nouveau motif ou décor, de sorte que la fabrication de nouveaux cylindres métalliques étant onéreuse et souvent longue, le coût de fabrication des revêtements de sol est grevé.

Afin de remédier à ces inconvénients, il peut être envisagé d'imprimer le motif ou le décor par un procédé d'impression à jet d'encre. Ce procédé présente l'avantage de permettre un changement de motif ou de décor rapide et peu onéreux. Les encres pour les procédés d'impression à jet d'encre consistent en des encres pigmentaires liquides, généralement constituées d'un pigment noir ou de couleur en suspension dans un solvant, ledit solvant conférant à la composition d'encre la fluidité ou viscosité nécessaire pour être facilement éjectée de la buse de la tête d'impression et pour éviter, lors des arrêts, que l'encre ne prenne en masse en colmatant la buse.

Le séchage devant être rapide, les solvants utilisés sont généralement très volatiles, ce qui pose des problèmes de pollution de l'environnement.

Bien que l'encre d'impression avec solvant présente une bonne compatibilité chimique avec la couche d'usure et la couche de support des revêtements de sol, l'utilisation d'un procédé d'impression à jet d'encre à partir d'une encre avec solvant n'est pas envisageable en raison des fortes émissions de composés organiques volatiles (COV) toxiques et néfastes pour l'environnement.

Par ailleurs, les encres sans solvant, n'émettant pas de composés organiques volatiles, pour impression par jet d'encre, sont connues. Toutefois, ces encres sans solvant présentent l'inconvénient de ne pas être chimiquement compatibles avec la couche support et la couche d'usure, de sorte qu'une délamination des couches support et d'usure apparaît rapidement.

Par exemple, il est connu les documents US2011/0268933 et GB2424618 qui décrivent chacun un revêtement de sol souple comprenant une structure multicouche incluant au moins une couche d'usure, une couche d'impression décor, et une couche support.

Cependant, le revêtement décrit dans ces documents est dépourvu de polychlorure de vinyle, de sorte que le problème lié à l'impression d'une encre pigmentaire sans solvant ne s'y pose pas.

Il est également connu le document US2004/086678 qui décrit un revêtement de sol souple comprenant au moins une couche d'usure en polychlorure de vinyle, une couche d'impression décor consistant dans une couche d'encre pigmentaire sans solvant, une couche support en polychlorure de vinyle, et au moins une couche de base liée à la couche d'impression décor.

Cependant dans ce document, la couche d'impression décor est déposée sur la couche de base.

### EXPOSE DE L'INVENTION

L'un des buts de l'invention est donc de remédier à ces inconvénients en proposant un revêtement de sol, et son procédé de fabrication, de conception simple et peu onéreuse, comportant une couche d'impression décor obtenue par un procédé d'impression à jet d'encre, n'émettant pas de composés organiques volatiles (COV) et ne se délaminant pas au cours du temps.

A cet effet et conformément à l'invention, il est proposé un procédé de fabrication de revêtement de sols souple comprenant une structure multicouche incluant au moins une couche d'usure, une couche d'impression décor et une couche support.

Selon l'invention, ce procédé comporte au moins les étapes suivantes :
- impression de la couche d'impression décor au moyen d'une imprimante à jet d'encre projetant une encre pigmentaire liquide sans solvant :
   ▪ sur la face inférieure de la couche d'usure transparente, ou
   ▪ sur la face supérieure de la couche support,
- apport d'énergie permettant le changement d'état de la couche d'impression décor de l'état liquide à l'état solide ;
- dépôt d'une couche de liaison sur la couche d'impression décor ainsi réalisée ou respectivement sur la face supérieure de la couche support dans le cas où l'impression de la couche d'impression décor est intervenue sur la face inférieure de la couche d'usure, ou sur la face inférieure de la couche d'usure dans le cas où l'impression de la couche d'impression décor est intervenue sur la face supérieure de la couche support, ladite couche de liaison étant chimiquement compatible avec l'encre à l'état solide formant la couche d'impression décor et avec la couche support ou la couche d'usure ;
- assemblage des sous-ensembles ainsi réalisés entre eux.

On comprend bien que, contrairement aux procédés de l'art antérieur, l'impression par jet d'encre de la couche d'impression décor permet de réduire les coût de fabrication tout en procurant une grande flexibilité pour changer les motifs et les décors des revêtements de sol, et que l'utilisation d'une couche de liaison qui est chimiquement compatible avec l'encre à l'état solide formant la couche d'impression décor et avec la couche support et/ou la couche d'usure permet d'éviter une délamination au cours du temps.

Selon une première variante d'exécution du procédé suivant l'invention, ce dernier comporte les étapes suivantes :
- impression de la couche d'impression décor sur la face supérieure de la couche support, au moyen d'une imprimante à jet d'encre projetant une encre pigmentaire liquide sans solvant,
- apport d'énergie permettant le changement d'état de la couche d'impression décor de l'état liquide à l'état solide,
- dépôt de la couche de liaison sur la couche d'impression décor à l'état solide,
- assemblage de la couche d'usure avec la couche de liaison.

Selon une seconde variante d'exécution du procédé suivant l'invention, ce dernier comporte au moins les étapes suivantes :
- impression de la couche d'impression décor sur la face inférieure de la couche d'usure, au moyen d'une imprimante à jet d'encre projetant une encre pigmentaire liquide sans solvant,
- apport d'énergie permettant le changement d'état de la couche d'impression décor de l'état liquide à l'état solide,
- dépôt de la couche de liaison sur la couche d'impression décor à l'état solide,
- assemblage de la couche de liaison sur la couche de support.

Selon une troisième variante d'exécution du procédé suivant l'invention, ce dernier comporte au moins les étapes suivantes :
- impression de la couche d'impression décor sur la face inférieure de la couche d'usure, au moyen d'une imprimante à jet d'encre projetant une encre pigmentaire liquide sans solvant,
- apport d'énergie permettant le changement d'état de la couche d'impression décor de l'état liquide à l'état solide,
- dépôt de la couche de liaison sur la couche support,
- assemblage de la couche d'impression décor à l'état solide sur la couche de liaison.

Selon une quatrième variante d'exécution du procédé suivant l'invention, ce dernier comporte au moins les étapes suivantes :
- impression de la couche d'impression décor sur la face supérieure de la couche support, au moyen d'une imprimante à jet d'encre projetant une encre pigmentaire liquide sans solvant,
- apport d'énergie permettant le changement d'état de la couche d'impression décor de l'état liquide à l'état solide
- dépôt de la couche de liaison sur la face inférieure de la couche d'usure,
- assemblage de la couche de liaison sur la couche d'impression décor à l'état solide.

La couche de liaison est opaque ou transparente.

Par ailleurs, la couche de liaison est obtenue dans un matériau comprenant une émulsion d'acrylique et d'uréthane et/ou un copolymère acrylique.

De préférence, la couche d'usure est obtenue dans du polychlorure de vinyle (PVC) et/ou du polyuréthane (PU) et/ou une polyoléfine.

De plus, la couche support est obtenue dans une résine thermoplastique choisie parmi le groupe suivant : polychlorure de vinyle (PVC) et/ou polyoléfines.

Un autre objet de l'invention concerne un revêtement de sols souple comprenant une structure multicouche incluant au moins une couche d'usure, une couche d'impression décor et une couche support. Ce revêtement comporte au moins une couche de liaison liée à la couche d'impression décor consistant dans une couche d'encre pigmentaire sans solvant déposée par une imprimante à jet d'encre et liée à la face inférieure de la couche d'usure ou à la face supérieure de couche support.

Selon une première variante d'exécution, ledit revêtement de sol est composé d'une couche support inférieure, d'une couche d'impression consistant dans une encre pigmentaire sans solvant déposée par une imprimante à jet d'encre sur la face supérieure de la couche support, une couche de liaison liée à la face supérieure de la couche d'impression décor et une couche d'usure liée à la face supérieure de la couche de liaison.

Ladite couche de liaison est avantageusement transparente.

Selon une seconde variante d'exécution, le revêtement de sol est composé d'une couche support inférieure, d'une couche de liaison liée à la face supérieure de la couche support, d'une couche d'impression consistant dans une encre pigmentaire sans solvant déposée par une imprimante à jet d'encre sur la face inférieure de la couche d'usure et liée à la face supérieure de la couche de liaison.

Ladite couche de liaison est alors opaque ou transparente.

Par ailleurs, ladite couche de liaison est obtenue dans un matériau comprenant une émulsion d'acrylique et d'uréthane et/ou un copolymère acrylique.

De préférence, la couche d'usure est obtenue dans du polychlorure de vinyle (PVC) et/ou du polyuréthane (PU) et/ou une polyoléfine.

De plus, la couche support comporte au moins une couche obtenue dans une résine thermoplastique choisie parmi le groupe suivant : polychlorure de vinyle (PVC) et/ou polyoléfines.

### DESCRIPTION SOMMAIRE DES FIGURES

D'autres avantages et caractéristiques du revêtement de sol et de son procédé de fabrication conformes à l'invention ressortiront mieux de la description qui va suivre de plusieurs variantes d'exécution, données à titre d'exemples non limitatifs, en référence aux dessins annexés sur lesquels :
- les figures 1A à 1F sont des représentations schématiques en coupe des différentes étapes du procédé de fabrication du revêtement de sol conforme à l'invention,
- les figures 2A à 2E sont des représentations schématiques en coupe des différentes étapes d'une première variante d'exécution du procédé de fabrication du revêtement de sol conforme à l'invention,
- les figures 3A à 3D sont des représentations schématiques en coupe des différentes étapes d'une seconde variante d'exécution du procédé de fabrication du revêtement de sol conforme à l'invention,
- les figures 4A à 4F sont des représentations schématiques en coupe des différentes étapes d'une troisième variante d'exécution du procédé de fabrication du revêtement de sol conforme à l'invention.

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas tracées à l'échelle.

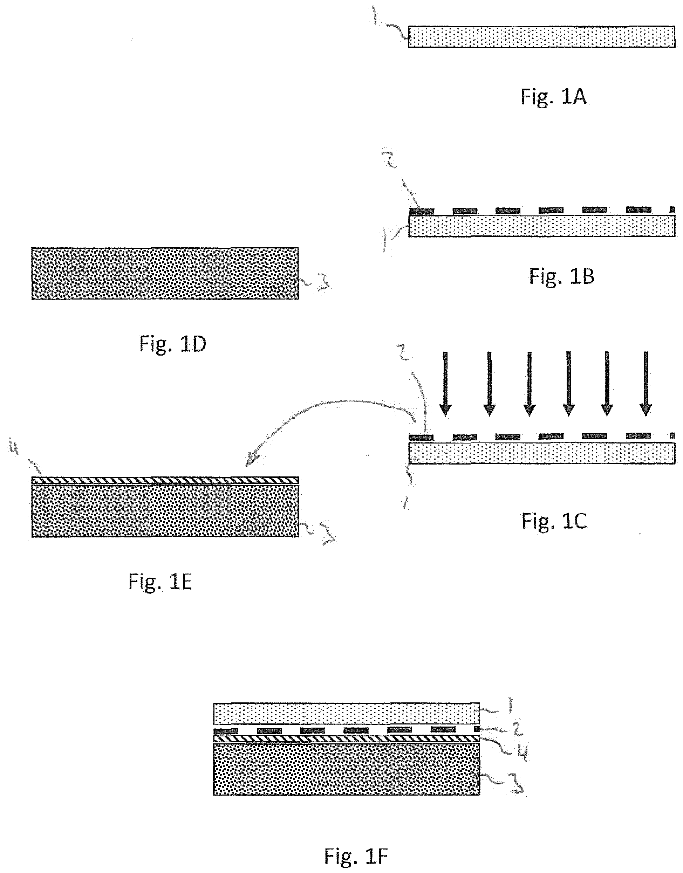

En référence aux figure 1A à 1F, le procédé de fabrication d'un revêtement de sol selon l'invention comporte une première étape (figure 1A) de fabrication d'une couche d'usure (1) transparente, par exemple par calandrage, par extrusion, par dépôt de granulés dits « *dry blends* », par enduction d'un plastisol sur un tapis transporteur ou par tout autre procédé bien connu de l'homme du métier. On entend par « *dry blends* » un mélange pulvérulent de granulés de polychlorure de vinyle (PVC) et de plastifiants, dans lequel le ou les plastifiants ont été absorbés par les granulés de PVC. Cette couche d'usure est essentiellement à base de polychlorure de vinyle (PVC), de préférence très plastifié et sans apport de diluant afin d'éviter l'émission de composés organiques volatiles (COV).

Il va de soi que la couche d'usure (1) pourra comporter une pluralité de couches sans pour autant sortir du cadre de l'invention.

En référence à la figure 1B, une couche d'impression décor (2) est déposée sur la face inférieure de la couche d'usure (1), au moyen d'une imprimante à jet d'encre projetant une encre pigmentaire liquide sans solvant photo-réticulable, ladite couche d'usure (2) étant retournée lors de l'impression de sorte que cette dernière présente sa face inférieure vers le haut. Ladite encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

En référence à la figure 1C, la couche d'encre ainsi déposée sur la couche d'usure (2) est photo-réticulée pour former la couche d'impression décor (2). La photo-réticulation est procurée par un apport d'énergie sous forme d'un rayonnement ultra-violet (UV) permettant le changement d'état de l'état liquide à l'état solide de couche d'impression décor (2).

Dans le même temps, en référence à la figure 1D, une couche dite de support (3) est fabriquée à partir d'une résine thermoplastique telle que du polychlorure de vinyle (PVC) par tout procédé bien connu de l'homme du métier. On notera que la couche de support (3) pourra comporter une pluralité de couches telle qu'une sous-couche résiliente constituée, par exemple, de mousse.

En référence à la figure 1E, une couche de liaison (4) est déposée sur la face supérieure de la couche support (3).

Ladite couche de liaison (4) est chimiquement compatible avec l'encre photo-réticulée et la couche support. Par ailleurs, ladite couche de liaison (4) est obtenue dans un matériau comprenant une émulsion d'acrylique et d'uréthane et/ou un copolymère acrylique. De plus, ladite couche de liaison peut être soit transparente, soit opaque.

Ensuite, en référence à la figure 1F, la couche d'usure (1) munie de la couche d'impression décor (2) est retournée et mise au contact de la couche de liaison (4) liée à la couche de support (3), de manière à procurer la liaison de la couche d'encre photo-réticulée formant la couche d'impression décor (2) avec la couche support (3). Le revêtement de sol ainsi obtenu est composé d'une couche support inférieure (3), d'une couche de liaison (4) liée à la face supérieure de la couche support (3), d'une couche d'impression décor (2) consistant dans une encre pigmentaire photo-réticulée déposée par une imprimante à jet d'encre sur la face inférieure d'une couche d'usure (1) et liée à la face supérieure de la couche de liaison (4).

On notera que l'impression par jet d'encre de la couche d'impression décor permet de réduire les coût de fabrication tout en procurant une grande flexibilité pour changer les motifs et les décors des revêtements de sol et que l'utilisation d'une couche de liaison (4), chimiquement compatible avec l'encre photo-réticulée formant la couche d'impression décor (2) et avec la couche support (3) et/ou la couche d'usure (1), permet d'éviter une délamination au cours du temps.

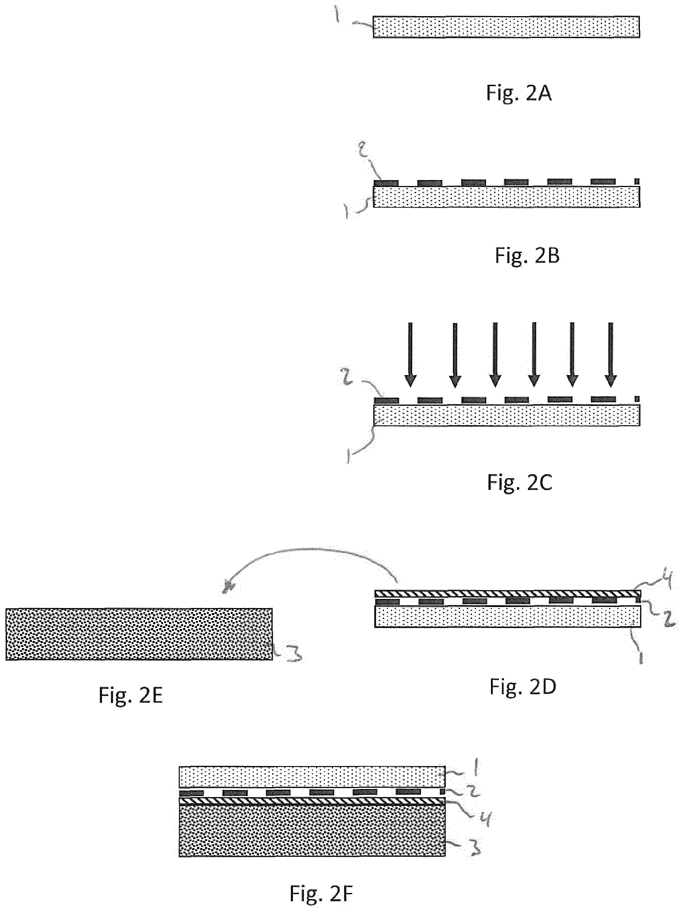

Selon une seconde variante d'exécution du procédé selon l'invention, en référence aux figure 2A à 2E, le procédé de fabrication d'un revêtement de sol comporte une première étape (figure 2A) de fabrication d'une couche d'usure (1) transparente, par exemple par calandrage, par extrusion, par dépôt de granulés dits « *dry blends* », par enduction d'un plastisol sur un tapis transporteur ou par tout autre procédé bien connu de l'homme du métier. Cette couche d'usure est essentiellement à base de polychlorure de vinyle (PVC), de préférence très plastifié et sans apport de diluant, et pourra éventuellement comporter une pluralité de couches.

En référence à la figure 2B, une couche d'impression décor (2) est déposée sur la face inférieure de la couche d'usure (1), au moyen d'une imprimante à jet d'encre projetant une encre pigmentaire liquide sans solvant photo-réticulable, ladite couche d'usure (2) étant retournée lors de l'impression de sorte que cette dernière présente sa face inférieure vers le haut. Ladite encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

En référence à la figure 2C, la couche d'encre ainsi déposée sur la couche d'usure (2) est photo-réticulée pour former la couche d'impression décor (2). La photo-réticulation est procurée par un apport d'énergie sous forme d'un rayonnement ultra-violet (UV) permettant le changement d'état de l'état liquide à l'état solide de couche d'impression décor (2).

En référence à la figure 2D, une couche de liaison (4) est déposée sur la face inférieure de la couche d'impression décor (2). Ladite couche de liaison (4) est chimiquement compatible avec l'encre photo-réticulée et la couche support. Par ailleurs, ladite couche de liaison (4) est obtenue dans un matériau comprenant une émulsion d'acrylique et d'uréthane et/ou un copolymère acrylique. De plus, ladite couche de liaison peut être soit transparente soit opaque.

Dans le même temps, en référence à la figure 2E, une couche dite de support (3) est fabriquée à partir d'une résine thermoplastique, telle que du polychlorure de vinyle (PVC) par tout procédé bien connu de l'homme du métier. On notera que la couche support (3) peut comporter une pluralité de couches, telle qu'une sous-couche résiliente constituée, par exemple, de mousse.

Ensuite, en référence à la figure 2F, la couche d'usure (1) munie de la couche d'impression décor (2) et de la couche de liaison (4) est retournée et mise au contact de la couche support (3), de manière à procurer la liaison de la couche de liaison (4) avec la couche support (3). Le revêtement de sol ainsi obtenu est composé d'une couche support inférieure (3), d'une couche de liaison (4) liée à la face supérieure de la couche support (3), d'une couche d'impression décor (2) consistant dans une encre pigmentaire photo-réticulée déposée par une imprimante à jet d'encre sur la face inférieure d'une couche d'usure (1) et liée à la face supérieure de la couche de liaison (4).

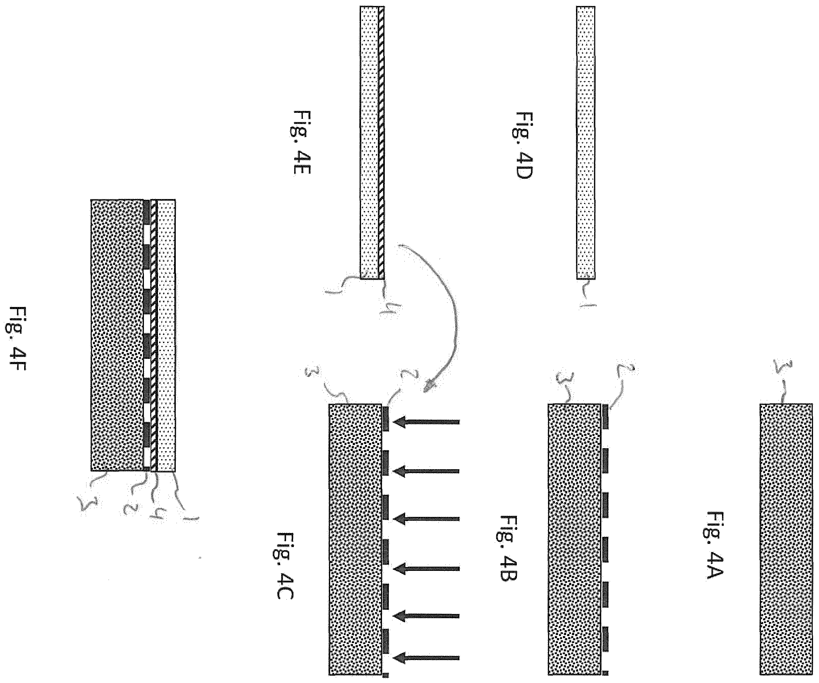

Selon une troisième variante d'exécution du procédé selon l'invention, en référence aux figures 4A à 4D, ce dernier comporte une première étape de fabrication d'une couche dite de support (3) à partir d'une résine thermoplastique telle que du polychlorure de vinyle (PVC) par tout procédé bien connu de l'homme du métier, tel que par un procédé de calandrage, d'extrusion, de pressage ou d'enduction par exemple. On notera que la couche support (3) peut comporter une pluralité de couches, telle qu'une sous-couche résiliente constituée, par exemple, de mousse.

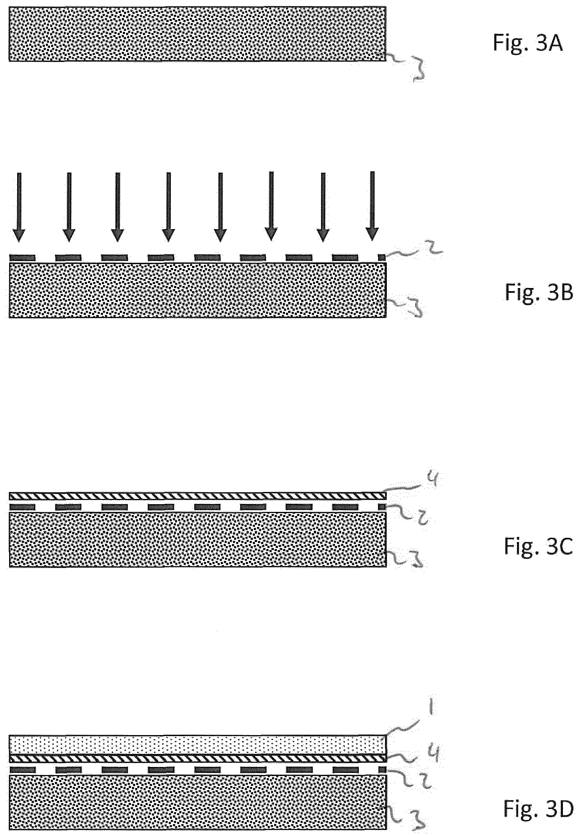

En référence à la figure 3B, une couche d'impression décor (2) est déposée sur la face supérieure de la couche support (3), au moyen d'une imprimante à jet d'encre projetant une encre pigmentaire liquide sans solvant photo-réticulable.

Puis la couche d'encre ainsi déposée sur la couche support (3) est photo-réticulée pour former la couche d'impression décor (2) sèche.

L'encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

Ensuite, en référence à la figure 3C, une couche de liaison (4) transparente est déposée sur la face supérieure de la couche d'impression décor (2). Ladite couche de liaison (4) est chimiquement compatible avec l'encre photo-réticulée et la couche support (3), et est obtenue dans un matériau comprenant une émulsion d'acrylique et d'uréthane et/ou un copolymère acrylique.

Finalement, en référence à la figure 3D, une couche d'usure (1) transparente est déposée sur la face supérieure de la couche de liaison (4), par exemple par calandrage, par extrusion, par dépôt de granulés dits « *dry blends* », par enduction d'un plastisol sur un tapis transporteur ou par tout autre procédé bien connu de l'homme du métier. Cette couche d'usure est essentiellement à base de polychlorure de vinyle (PVC), de préférence très plastifié et sans apport de diluant notamment.

Le revêtement de sol ainsi obtenu est composé d'une couche support (3) inférieure, d'une couche d'impression décor (2) consistant dans une encre pigmentaire photo-réticulée déposée par une imprimante à jet d'encre sur la face supérieure de la couche support (3), une couche de liaison (4) liée à la face supérieure de la couche d'impression décor (2) et une couche d'usure (1) liée à la face supérieure de la couche de liaison (4).

Selon une quatrième variante d'exécution du procédé selon l'invention, en référence aux figures 4A à 4F, ce dernier comporte une première étape (figure 4A) de fabrication d'une couche dite de support (3) à partir d'une résine thermoplastique, telle que du polychlorure de vinyle (PVC) par tout procédé bien connu de l'homme du métier tel que par un procédé de calandrage, d'extrusion, de pressage ou d'enduction par exemple. On notera que la couche support (3) peut comporter une pluralité de couches telle qu'une sous-couche résiliente constituée, par exemple, de mousse.

En référence à la figure 4B, une couche d'impression décor (2) est déposée sur la face supérieure de la couche support (3), au moyen d'une imprimante à jet d'encre projetant une encre pigmentaire liquide sans solvant photo-réticulable, puis, en référence à la figure 4C, la couche d'encre ainsi déposée sur la couche de support (3) est photo-réticulée pour former la couche d'impression décor (2) sèche. Ladite encre pigmentaire liquide sans solvant photo-réticulable consiste par exemple dans une encre comprenant des uréthane-acrylates et/ou des ester-acrylates ou dans toute autre encre pigmentaire liquide photoréticulable sans solvant bien connue de l'homme du métier.

Dans le même temps, en référence à la figure 4D, une couche d'usure (1) transparente est fabriquée par exemple par calandrage, par extrusion, par dépôt de granulés dits « *dry blends* », par enduction d'un plastisol sur un tapis transporteur ou par tout autre procédé bien connu de l'homme du métier. Cette couche d'usure est essentiellement à base de polychlorure de vinyle (PVC), de préférence très plastifié et sans apport de diluant, et peut éventuellement comporter une pluralité de couches.

Puis, en référence à la figure 4E, une couche de liaison (4) transparente est déposée sur la face inférieure de la couche d'usure (1), ladite couche de liaison (4) étant chimiquement compatible avec la couche d'usure (1) et obtenue dans un matériau comprenant une émulsion d'acrylique et d'uréthane et/ou un copolymère acrylique. On notera que ladite couche d'usure (1) est retournée lors du dépôt de la couche de liaison (4), de sorte que cette dernière présente sa face inférieure vers le haut.

Ensuite, en référence à la figure 4F, l'ensemble constitué par la couche d'usure (1) et la couche de liaison (4) est retourné et mis au contact avec la couche d'impression décor (2), de manière à procurer la liaison de la couche d'encre photo-réticulée formant la couche d'impression décor (2) avec la couche de liaison (4).

Le revêtement de sol ainsi obtenu est composé d'une couche support (3) inférieure, d'une couche d'impression décor (2) consistant dans une encre pigmentaire photo-réticulée déposée par une imprimante à jet d'encre sur la face supérieure de la couche support (3), d'une couche de liaison (4) liée à la face supérieure de la couche d'impression décor (2) et d'une couche d'usure (1) liée à la face supérieure de la couche de liaison (4).

Par ailleurs, selon une autre variante d'exécution, l'encre pigmentaire liquide sans solvant photo-réticulable est substituée par une encre dite latex sans solvant, le changement d'état de ladite encre de l'état liquide à l'état solide étant alors réalisé par un apport d'énergie sous forme de chaleur. Une telle encre latex comporte notamment, par exemple, une résine du type pyrrolidone, une résine de copolymère styrène-acrylique et de l'eau. Une telle encre latex est notamment commercialisée sous la référence HP L25500 par la société Hewlet Packard.

Selon une dernière variante d'exécution, l'encre pigmentaire liquide sans solvant photo-réticulable est substituée par une encre dite EB, selon l'acronyme anglo-saxon « *Electronic Beam* », le changement d'état de ladite encre de l'état liquide à l'état solide étant alors réalisé par un apport d'énergie sous la forme d'un faisceau d'électrons. Une telle encre EB comprend de manière bien connue en soi des prépolymères, des monomères et éventuellement un ou plusieurs photo-amorceurs cationiques et/ou radicalaires.

Enfin, il est bien évident que les exemples précités ne sont que des illustrations particulières en aucun cas limitatives quant aux domaines d'application de l'invention.

## Revendications

1. Revêtement de sol souple comprenant une structure multicouche incluant au moins une couche d'usure (1) en polychlorure de vinyle, une couche d'impression décor (2) consistant dans une couche d'encre pigmentaire sans solvant déposée par une imprimante à jet d'encre, une couche support (3) en polychlorure de vinyle, et au moins une couche de liaison (4) liée à la couche d'impression décor (2), ***caractérisé* en ce que** ladite couche d'encre est déposée par ladite imprimante à jet d'encre sur la face inférieure de la couche d'usure (1) ou sur la face supérieure de la couche support (3).

2. Revêtement de sol selon la revendication 1 ***caractérisé* en ce qu'**il est composé d'une couche support (3) inférieure, d'une couche d'impression décor (2) consistant dans une encre pigmentaire sans solvant déposée par une imprimante à jet d'encre sur la face supérieure de la couche support (3), une couche de liaison (4) liée à la face supérieure de la couche d'impression décor (2) et une couche d'usure (1) liée à la face supérieure de la couche de liaison (4).

3. Revêtement de sol selon la revendication 2 ***caractérisé* en ce que** la couche de liaison (4) est transparente.

4. Revêtement de sol selon la revendication 1 ***caractérisé* en ce qu'**il est composé d'une couche support (3) inférieure, d'une couche de liaison (4) déposée sur la face supérieure de la couche support (3), d'une couche d'impression décor (2) consistant dans une encre pigmentaire sans solvant déposée par une imprimante à jet d'encre sur la face inférieure de la couche d'usure (1) et liée à la face supérieure de la couche de liaison (4).

5. Revêtement de sol selon l'une quelconque des revendications 1 à 4 ***caractérisé* en ce que** la couche de liaison (4) est obtenue dans un matériau comprenant une émulsion d'acrylique et d'uréthane et/ou un copolymère acrylique.

6. Revêtement de sol selon l'une quelconque des revendications 1 à 5 ***caractérisé* en ce que** la couche de liaison (4) est obtenue dans un matériau comprenant une émulsion d'acrylique et d'uréthane et/ou un copolymère acrylique.

7. Revêtement de sol selon l'une quelconque des revendications 1 à 6 ***caractérisé* en ce que** la couche de support (3) comporte une sous-couche résiliente.

## Patentansprüche

1. Flexibler Bodenbelag mit einer mehrschichtigen Struktur, die mindestens eine Polyvinylchlorid-Verschleißschicht (1), eine aus einer lösungsmittelfreien, farbigen, mit einem Tintenstrahldrucker aufgedruckten Pigmentschicht bestehende bedruckte Dekoschicht (2), eine Polyvinylchlorid-Trägerschicht (3) und mindestens eine Verbindungsschicht (4), die mit der bedruckten Dekoschicht (2) verbunden ist umfasst und **dadurch gekennzeichnet ist, dass** die Farbschicht von dem Tintenstrahldrucker auf der Unterseite der Verschleißschicht (1) oder auf der Oberseite der Trägerschicht (3) aufgedruckt wird.

2. Bodenbelag nach Anspruch 1, **dadurch gekennzeichnet, dass** er aus einer unteren Trägerschicht (3), einer aus einer lösungsmittelfreien Pigmenttinte bestehenden bedruckten Dekoschicht (2), die von einem Tintenstrahldrucker auf der Oberseite der Trägerschicht (3) aufgedruckt wird, einer mit der Oberseite der bedruckten Dekoschicht (2) verbundenen Verbindungsschicht (4) und einer mit der Oberseite der Verbindungsschicht (4) verbundenen Verschleißschicht (1) besteht.

3. Bodenbelag nach Anspruch 2, **dadurch gekennzeichnet, dass** die Verbindungsschicht (4) transparent ist.

4. Bodenbelag nach Anspruch 1, **dadurch gekennzeichnet, dass** er aus einer unteren Trägerschicht (3), einer auf der Oberseite der Trägerschicht (3) abgeschiedenen Verbindungsschicht (4), einer bedruckten Dekoschicht (2) aus einer lösungsmittelfreien Pigmenttinte, die von einem Tintenstrahldrucker auf der Unterseite der Verschleißschicht (1) aufgedruckt ist und mit der Oberseite der Verbindungsschicht (4) verbunden ist, besteht.

5. Bodenbelag nach einem beliebigen der Ansprüche 1 bis 4, **dadurch gekennzeichnet, dass** die Verbindungsschicht (4) aus einem Material erzielt wird, das eine Acryl- und Urethanemulsion und/oder ein Acrylcopolymer umfasst.

6. Bodenbelag nach einem der Ansprüche 1 bis 5, **dadurch gekennzeichnet, dass** die Verbindungsschicht (4) aus einem Material erzielt wird, das eine Acryl- und Urethanemulsion und/oder ein Acrylcopolymer umfasst.

7. Bodenbelag nach einem der Ansprüche 1 bis 6, **dadurch gekennzeichnet, dass** die Trägerschicht (3) eine elastische Unterlage aufweist.

## Claims

1. Flexible floor covering incorporating a multi-layer structure incorporating at least one wear layer (1) in polyvinyl chloride, one decor print layer (2) consisting of a solvent-free pigmentary ink layer deposited by an ink jet printer,
one support layer (3) in polyvinyl chloride, and at least one binding layer (4) linked to the decor print layer (2), ***characterized* in that** the said ink layer is deposited by the said ink jet printer on the lower face of the wear layer (1) or on the upper face of the support layer (3).

2. Floor covering in accordance with claim 1, ***characterized* in that** it is composed of a lower support layer (3), a decor print layer (2) consisting of a solvent-free pigmentary layer deposited by an ink jet printer on the upper face of the support layer (3), a binding layer (4) bound to the upper face of the decor print layer (2), and a wear layer (1) bound to the upper face of the binding layer (4).

3. Floor covering in accordance with claim 2, ***characterized* in that** the binding layer (4) is transparent.

4. Floor covering in accordance with claim 1, ***characterized* in that** it is composed of a lower support layer (3), a binding layer (4) deposited on the upper face of the support layer (3), and a decor print layer (2) consisting of a solvent-free pigmentary ink deposited by an ink jet printer on the lower face of the wear layer (1) and bound to the upper face of the binding layer (4).

5. Floor covering in accordance with any of claims 1 to 4, ***characterized* in that** the binding layer (4) is made of a material including an acrylic, urethane and/or acrylic co-polymer emulsion.

6. Floor covering in accordance with any of claims 1 to 5, ***characterized* in that** the binding layer (4) is made of a material including an acrylic, urethane and/or acrylic co-polymer emulsion.

7. Floor covering in accordance with any of claims 1 to 6, ***characterized* in that** the support layer (3) incorporates a resilient sub-layer.
